Europäisches Patentamt

European Patent Office

Office européen des brevets

(11) Veröffentlichungsnummer: **0 304 020 B1**

# EUROPÄISCHE PATENTSCHRIFT

(45) Veröffentlichungstag der Patentschrift: **22.01.92**

(51) Int. Cl.⁵: **B65G 69/18**

(21) Anmeldenummer: **88113314.4**

(22) Anmeldetag: **17.08.88**

Verbunden mit 88907320.1/0377610
(europäische
Anmeldenummer/Veröffentlichungsnummer)
durch Entscheidung vom 22.01.91.

(54) **Vorrichtung zum Beladen eines Silofahrzeuges oder dergleichen mit rieselfähigem Schüttgut.**

(30) Priorität: **19.08.87 DE 3727561**

(43) Veröffentlichungstag der Anmeldung:
**22.02.89 Patentblatt 89/08**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI LU NL SE**

(56) Entgegenhaltungen:
**EP-A- 0 073 349**
**DE-U- 8 618 197**
**FR-A- 2 159 099**
**FR-A- 2 387 180**
**FR-A- 2 562 525**

(73) Patentinhaber: **Stanelle, Karl-Heinz**
**Rosenstrasse 4**
**W-7129 Güglingen 2(DE)**

(72) Erfinder: **Stanelle, Ambros**
**Rosenstrasse 4**
**W-7129 Güglingen 2(DE)**
Erfinder: **Stanelle, Andric**
**Rosenstrasse 4**
**W-7129 Güglingen 2(DE)**

(74) Vertreter: **Müller, Hans**
**Lerchenstrasse 56**
**W-7100 Heilbronn(DE)**

## Beschreibung

### TECHNISCHES GEBIET

Die Erfindung betrifft eine Vorrichtung zum Beladen eines Silofahrzeuges oder dergleichen mit rieselfähigem Schüttgut.

Derartige Beladevorrichtungen werden zum staubfreien, vertikalen Einfüllen von staub- und grießförmigen Schüttgütern wie Zement, Kalk, Gips, Fertigputz, Basalt, Granulat und dergleichen zum Teil hochgradig abrasiver Schüttgüter, in Silofahrzeuge, Bahnwaggons oder in andere Behältnisse hinein verwendet.

Zum Beladen eines Silofahrzeuges mit Hilfe einer derartigen Beladevorrichtung wird dieselbe so weit nach unten gefahren, bis der Aufsetzkonus der Beladevorrichtung auf dem Dom des Silofahrzeugs aufsitzt. Der innige Kontakt zwischen dem Aufsetzkonus und dem Dom des Silofahrzeugs ermöglicht eine einwandfreie Staubabdichtung während des Beladevorganges.

Das im Silofahrzeug durch die Befüllung mit Feststoffen verdrängte Staub-Luft-Gemisch wird durch den in der Beladevorrichtung vorhandenen Abzugskanal abgesaugt.

### STAND DER TECHNIK

Eine erste Art von Beladevorrichtungen besitzt einen den eigentlichen Verladeschlauch bildenden Innenschlauch, der konzentrisch von einem Außenschlauch umgeben ist. Beide Schläuche können ziehharmonikaartig zusammengezogen bzw. auseinandergezogen werden. Der Bereich zwischen dem Innenschlauch und dem Außenschlauch dient zur Abführung des Staub-Luft-Gemisches, das während des Beladevorganges aus dem zu befüllenden Behälter verdrängt wird. Das untere Ende dieser Doppelschlauch-Beladevorrichtung kann bei Nichtgebrauch durch ein Verschlußteil verschlossen werden, das an der Unterseite der Beladevorrichtung staubdicht von unten angelegt werden kann. Durch mehr oder weniger weites Anheben des an der Unterseite anliegenden Verschiußteils lassen sich das Verschlußteil und damit auch die beiden Doppelschläuche entsprechend weit nach oben anheben. Durch Absenken des Verschlußteils ziehen sich andererseits die Doppelschläuche auseinander, so daß der Außenschlauch staubdicht an dem Dom eines Silofahrzeugs oder dergleichen aufgesetzt werden kann.

Das Anheben und Absenken des Verschlußteils erfolgt über ein Seilsystem, das zwischen dem Außen- und dem Innenschlauch angeordnet ist. Damit befindet sich das Seilsystem nicht im Inneren des Innenschlauches und damit nicht im Schüttgutstrom. Der Zustrom des Schüttgutes kann folglich nicht beeinträchtigt werden, was sich vorteilhaft auf die Beladeleistung auswirkt. Sehr nachteilig bei dieser Beladevorrichtung wirkt sich aber das Vorhandensein des Innenschlauches aus, da derselbe insbesondere bei sehr abrasiven Schüttgütern einem starken Verschleiß ausgesetzt ist. Die Praxis hat ergeben, daß der Innenschlauch unverhältnismäßig häufig ausgewechselt werden muß, was nicht nur unmittelbar im Zusammenhang mit dem Austausch dieses Innenschlauches anfallende Kosten verursacht, sondern darüber hinaus auch regelmäßig zu Störungen im Beladebetrieb führt. Doppelschlauch-Belader haben sich daher in den Fällen, wo mit wechselnden, unterschiedlich abrasiven Schüttgütern gerechnet werden muß, auf dem Markt nicht durchgesetzt.

Aus der EP-A-73 349 ist eine Beladevorrichtung bekannt, bei der der "Verladeschlauch" aus mehreren verschleißfesten, über die Fallhöhe verteilt angeordneten, sich jeweils in Längsrichtung des Fallschachtes nach unten verjüngenden Trichtern zusammengesetzt ist. Die bekannten Trichter besitzen die Form eines hohlen Kegelstumpfes mit kreisförmigen Grundflächen. Der jeweils obere Trichter sitzt mit seinem unteren Ende mehr oder weniger weit innerhalb des oberen Bereichs des jeweils unteren Trichters, woraus sich eine unterschiedliche Bauhöhe der Beladevorrichtung ergibt. Aus Gründen einer möglichst großen Verladeleistung wird der Innendurchmesser der Trichter möglichst groß gewählt. Da außerdem die Neigung der Seitenwände jedes Trichters nicht zu steil sein darf, um ein Verkeilen ineinandersteckender Trichter zu vermeiden, hat sich eine Trichterform bei allen auf dem Markt befindlichen Trichtern ergeben, bei der der jeweils obere Öffnungsrand einen größeren Durchmesser besitzt als der von einem Verschlußteil zu verschließende untere Öffnungsrand des Aufsetzkonus. Dies bedingt, daß die Zugeinrichtungen für das Verschlußteil nicht mehr ohne störende Umlenkeinrichtungen gradlinig zwischen den Trichtern und dem diese außen konzentrisch umgebenden Faltenbalg hindurchgeführt werden können. Das Verschlußteil einer derartigen, nach unten jeweils verjüngende Trichter aufweisenden Beladevorrichtung ist daher an einem Seil befestigt, das zentrisch innerhalb der Beladevorrichtung und damit zentrisch im Fallschacht, innerhalb der Becher vorhanden ist. Dieses Seil ist dadurch aber dem Schüttgutstrom ausgesetzt und unterliegt folglich einem starken Verschleiß. Da dieses Seil im oberen Bereich der Beladevorrichtung rechtwinklig aus dem Schüttgutstrom und damit aus dem Fallschacht herausgeführt werden muß, damit das Verschlußteil motorisch oder per Hand hochgezogen oder abgesenkt werden kann, ist auch diese Umlenkrolle dem Schüttgutstrom und damit einem großen Verschleiß ausgesetzt. Außerdem hat sich herausgestellt, daß durch Anhaften von Schüttgutteilchen an der Umlenkrolle deren Funktiontüchtig-keit beeinträchtigt wird. Auch dies führt zu unerwünschten Störungen während des Betriebs derartiger Beladevorrichtungen.

DARSTELLUNG DER ERFINDUNG

Der Erfindung liegt die Aufgabe zugrunde, eine Vorrichtung zum Beladen eines Silofahrzeuges oder dergleichen mit rieselfähigem Schüttgut anzugeben, die mit einer Verschlußvorrichtung ausgestattet ist und die die vorstehend geschilderten Nachteile nicht besitzt und damit eine möglichst hohe Schüttleistung zuläßt.

Ausgehend von der aus der EP-A-73 349 bekannten Vorrichtung zum Beladen eines Silofahrzeuges oder dergleichen mit rieselfähigem Schüttgut wird diese Aufgabe erfindungsgemäß durch die Merkmale des Hauptanspruchs gelöst. Diese danach bekannte Vorrichtung ist mit einem Fallschacht für das Schüttgut ausgestattet, der mehrere über die Fallhöhe verteilt angeordnete, sich jeweils in Längsrichtung des Fallschachtes nach unten verjüngende Trichter besitzt. Die Vorrichtung besitzt ferner einen außerhalb des Fallschachtes vorhandenen Abzugskanal zum Abführen des beim Befüllen entweichenden SchüttgutLuft-Gemisches und einen Aufsetzkonus zum staubdichten Aufsetzen der Vorrichtung auf der kreisförmigen Einfüllöffnung des Silofahrzeuges, der die äußere untere Umhüllung des Abzugskanals bildet. Ein Verschlußteil am unteren Ende des Aufsetzkonus dient zum Verschließen des unteren Ende des Fallschachtes und wird mit einer Einrichtung, die zumindest ein erstes Zugglied enthält in unterschiedlich großem Abstand zum unteren Rand des Fallschachtes gehalten. Die Erfindung zeichnet sich bei einer derartigen Beladevorrichtung demnach dadurch aus, daß zumindest der unterste Trichter in seinen zur Längsrich-tung des Fallschachtes normalen Querschnittsebe-nen in etwa rechteckförmig ist, daß zumindest eine Trichterseite im Grundriß sehnenartig den die Öff-nung der Beladevorrichtung begrenzenden Kreisbo-gen des Aufsetzkonus schneidet, und daß das erste Zugglied längs einer Geraden in dem Abzugskanal vorhanden ist, wobei es so an dem Verschlußteil befestigt ist, daß es in dem zwischen dieser Sehne und dem Kreisbogen des Aufsetzkonus grundrißmäßig vorhandenen Freiraum führbar ist.

In diesem zwischen dieser Sehne und dem Kreisbogen des Aufsetzkonus verbleibenden Zwischenraum ist so Platz für die Durchführung der Zugeinrichtung, an der das die Beladevorrichtung von unten verschließende Verschlußteil befestigt ist. Die Zugeinrichtung braucht damit nicht innerhalb des Fallschachtes und damit nicht dem Schüttgutstrom ausgesetzt zu werden. Dies hat positive Auswirkungen auf die Lebensdauer der Zugeinrichtung und außerdem auf die Funktionstüchtigkeit des Verschlußteils. Außerdem kann bei der erfindungsgemäßen Beladevorrichtung auch auf das für abrasive Schüttgüter besonders geeignete Trichter-System zurückgegriffen werden. Auch die Verladeleistung ist optimal groß, da im Fallschacht kein den Querschnitt einengendes und die Fallgeschwindigkeit des Schüttgutes abbremsendes Zugseil oder dergleichen vorhanden ist. Die mit der erfindungsgemäßen Beladevorrichtung vorhandene Möglichkeit, die Zugeinrichtung für das Verschlußteil auf die Außenseite der Trichter zu verlegen, hat zu einer Steigerung der Verladeleistung gegenüber vergleichbaren Trichter-Beladern von etwa 10 % geführt.

Als günstig hat es sich herausgestellt, das zum Halten des Verschlußteils im Abzugskanal vorhandene Zugglied parallel zur Längsrichtung des Fallschachtes auszurichten. Damit ist ein minimaler Kraftaufwand zum Anheben des Verschlußteils erforderlich.

Um sicherzustellen, daß das Verschlußteil zentrisch von unten an dem Aufsetzkonus angelegt und diesen damit verschliessen kann, ist an der Außenseite des untersten Trichters eine Führung vorhanden, in der die Zugeinrichtung für das Verschlußteil so höhenmäßig verstellbar ist, daß das Verschlußteil kipp- und verdrehsicher in unterschiedlich großem Abstand vom unteren Rand des Aufsetzkonus entfernt positionierbar ist.

Diese kipp- und verdrehsichere Führung des Verschlußteils läßt sich dabei in vorteilhafter Weise mit einem biegesteif ausgebildeten Zugglied für das Verschlußteil bewirken. Insbesondere besitzt dabei das zum Halten des Verschlußteils vorhandene Zugglied in seinem unteren Bereich zwei biegesteife stabförmige Glieder und in seinem daran anschließenden oberen Bereich zwei Zugseile, wobei jeweils ein Zugseil an einem stabförmigen Glied und jedes der stabförmigen Glieder an dem Verschlußteil befestigt ist. Ferner ist dabei jedes Zugseil mit seinem oberen Ende in dem oberen Bereich der Vorrichtung auf- und abwickelbar gehalten, um so das Verschlußteil in unterschiedlichen Höhen halten zu können.

Nach einer weiteren Ausgestaltung der Erfindung sind die Trichter untereinander durch zumindest zwei zweite Zugglieder aneinanderhängend gehalten. Dabei ist dieses zweite Zugglied auf zwei gegenüberliegenden Seitenwänden eines jeden Trichters befestigt, wobei jeweils eine Führung an den zwei übrigen Seitenwänden eines jeden Trichters vorhanden ist, in der jeweils das zum Halten des Verschlußteils benötigte Zugglied in der Höhe verstellbar gehalten ist. Die Trichter werden in vertikaler Richtung damit einerseits nach unten hin mittels des Verschlußteils über das letzteres haltende Zugglied und außerdem und unabhängig davon über die zweiten Zugglieder, an denen die Trichter übereinanderhängend verbunden sind, gehalten. Auch bei Ausfall eines dieser beiden Zugglieder wird damit verhindert, daß die Trichter unkontrolliert herabstürzen können.

Eine besonders vorteilhafte Weiterbildung der Erfindung zeichnet sich dadurch aus, daß der Fallschacht insgesamt, und damit auch im Bereich des Kopfkastens, aus derartigen Trichtern gebildet wird. Die im Querschnitt rechteckige Querschnittsform ist damit auch unter einem regelmäßig oberhalb einer Beladevorrichtung vorhandenen Absperrorgan, das unterhalb eines Schüttgut enthaltenden Auslauftrichters angeordnet ist, vorhanden. Obwohl es auch im Querschnitt kreisförmige Schiebeorgane wie beispielsweise eine Drosselklappe mit einer um eine quer im Schüttgutstrom vorhandene Achse drehende Flügelklappe gibt, sind rechteckige Querschnittsflächen mehr oder weniger weit verschließende Schieber aus betrieblicher Sicht ansich am geeignetsten.

Derartige Rechteck-Schieber konnten bei den aus dem Stand der Technik bekannten, einen im Querschnitt kreisförmigen Trichter-Fallschacht aufweisenden Beladern nicht störungsfrei eingesetzt werden; infolge der Querschnittsverjüngung des Fallschachtes von einem Rechteck im Bereich des Schiebers zu einem vom Rechteck eingeschlossenen Kreis unterhalb des Schiebers setzten sich in den vier Ecken des Schiebers Schüttgutteilchen ab, die mit der Zeit eine derartig feste Ablagerung bildeten, daß der Schieber nicht mehr vollständig verschlossen werden konnte. Dies führte zum Vollaufen des Silofahrzeuges und damit auch der gesamten Beladevorrichtung.

Um die Steuerungsgerätschaften für den Betrieb der Beladevorrichtung und damit auch beispielsweise die Antriebseinrichtung für das Anheben oder Absenken der Zugglieder von außen geschützt unterzubringen, ist in vorteilhafter Weise im Bereich außerhalb des obersten Trichters ein die gesamte Mechanik der Beladevorrichtung aufnehmender Kopfkasten vorhanden.

Ein optimaler Beladequerschnitt ergibt sich, wenn die im Belader vorhandenen Trichter, insbesondere der unterste Trichter, in seinen zur Längsrichtung des Fallschachtes normalen Querschnittsebenen in etwa quadratisch ausgebildet ist.

Um das Ausströmen des Schüttgutes aus der Beladevorrichtung zu verbessern, hat es sich al s besonders sinnvoll erwiesen, am unteren Öffnungsrand des untersten Trichters ein sich nach unten trompetenartig erweiterndes Kragglied anzubringen. Bei diesem Kragenteil ist der größte Querschnittsdurchmesser mindestens um soviel kleiner als der lichte Durchmesser der unteren Öffnung des Verschlußkonus, daß grundrißmäßig nach wie vor ein Zwischenraum zwischen unterstem Trichter und Verschlußkonus vorhanden ist, durch den das das Verschlußteil haltende Zugglied hindurchgeführt werden kann.

Die Vorrichtung erweist sich außerdem dadurch als besonders bedienfreundlich, daß an dem Verschlußteil unten ein Füllstandsmesser angebracht ist. In diesem Zusammenhang erweist es sich als vorteilhaft, wenn das biegesteife stabförmige Glied zum Halten des Verschlußteils ein Rohr ist, durch dessen Inneres dann die Versorgungsleitung für diesen elektronisch, elektromechanisch oder pneumatisch arbeitenden Füllstandsfühler hindurchgeführt werden kann.

Weitere Ausgestaltungen und Vorteile der Erfindung sind den in den Ansprüchen weiterhin aufgeführten Merkmalen zu entnehmen.

KURZE BESCHREIBUNG DER ZEICHNUNG

Die Erfindung wird im folgenden anhand des in der Zeichnung dargestellten Ausführungsbeispiels näher beschrieben und erläutert. Die der Beschreibung und der Zeichnung zu entnehmenden Merkmale können bei anderen Ausführungsformen der Erfindung einzeln für sich oder zu mehreren in beliebiger Kombination angewendet werden. Es zeigen:

Fig. 1 einen Längsschnitt durch eine auf einem Silofahrzeug aufsitzende Beladevorrichtung,

Fig. 2 eine Schnittdarstellung durch den unteren Teil der Beladevorrichtung nach Fig. 1, bei der das Verschlußteil so weit angehoben ist, daß es von unten an dem untersten Trichter anliegt,

Fig. 3 eine Darstellung entsprechend Fig. 2, bei der das Verschlußteil so weit angehoben ist, daß es von unten staubdicht an dem unteren freien Rand des Aufsetzkonus anliegt,

Fig. 4 eine Darstellung entsprechend Fig. 3, bei der das Verschlußteil aber weiter angehoben ist, so daß der unterste Trichter sich über den darüber befindlichen Trichter geschoben hat und die Beladevorrichtung nicht mehr auf dem Silofahrzeug aufsitzt, und

Fig. 5 eine perspektivische Darstellung des Verschlußteils, des untersten sowie eines weiteren Trichters und eines Füllstandsfühlers.

WEGE ZUR AUSFÜHRUNG DER ERFINDUNG

Ein sogenannter Belader 10, der eine Vorrichtung zum Beladen eines Silofahrzeuges oder dergleichen mit rieselfähigem Schüttgut darstellt, ist unterhalb eines Schiebers 12 vorhanden. Dieser Schieber 12 schließt seinerseits von unten an den Auslauftrichter 14 eines in der Zeichnung nicht näher dargestellten Silobehälters an.

Der Belader 10 besitzt mehrere Trichter 16 (16.1, 16.2, 16.3, 16.4, 16.5), die die Gestalt von hohlen, geraden Pyramidenstümpfen mit quadratischer Grundfläche besitzen. Diese Trichter verjüngen sich jeweils nach unten hin und stecken teilweise ineinander, so daß der untere den jeweils über ihm befindlichen Trichter von unten her um ein gewisses Maß überdeckt.

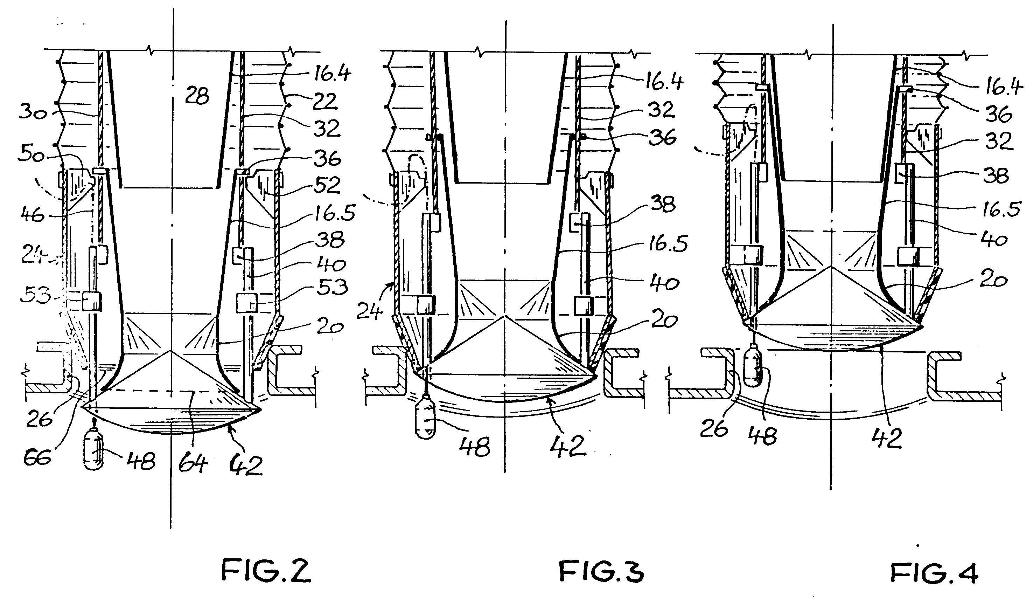

Im ausgefahrenen Zustand des Beladers 10, in dem dieser seine maximale Länge besitzt, ist das Überdeckungsmaß zwischen den einzelnen Trichtern am geringsten. Im in der Höhe zusammengeschobenen Zustand des Beladers 10 stecken die Trichter ineinander, so wie das bei der Darstellung in Fig. 4 mit den untersten beiden Trichtern vergleichsweise dargestellt ist.

Der oberste Trichter 16.1 ist von einem Kopfkasten 18 umgeben, in dem die gesamte Steuerungsmechanik für den Belader angeordnet ist. Der oberste Trichter 16.1 schließt mit seiner oberen, quadratischen Öffnung von unten an den Schieber 12 an. Der vom Schieber 12 maximal freizugebende Querschnitt entspricht der Querschnittsform und der Querschnittsgröße des obersten Trichters in dessen oberstem Querschnittsbereich.

An der Unterseite des untersten Trichters 16.5 schließt sich ein Kragen 20 an, der sich nach unten hin trompetenartig verbreitert. Im Anschlußbereich zwischen dem Kragen 20 und dem Trichter 16.5 besitzt letzterer einen quadratischen Querschnitt.

Die Trichter 16 sind unterhalb des Kopfkastens 18 von einem die Trichter außen konzentrisch umgebenden Faltenbalg 22 umgeben. Dieser Faltenbalg 22 ist mit seinem oberen Ende an dem Kopfkasten 18 befestigt. An dem unteren Ende dieses Faltenbalgs 22 ist ein Aufsetzkonus 24 befestigt, der in seinem oberen Bereich die Form eines hohlen kreisförmigen Zylinders und in seinem unteren Bereich die eines hohlen kreisförmigen Zylinderstumpfes besitzt. Mit seinem unten konisch zusammenlaufenden Bereich sitzt der Aufsetzkonus auf dem Dom 26 eines nicht näher dargestellten Silofahrzeuges auf.

Im Zwischenraum 27 zwischen den Trichtern 16 und dem Faltenbalg 22 bzw. dem Aufsetzkonus 24 sind zwei, sich bezüglich der Systemlängsachse 28 gegenüberliegende Seilzüge 30, 32 vorhanden. Jeder Seilzug 30, 32 endet im Kopfkasten 18, wo er in nicht näher dargestellter Weise aufgewickelt bzw. abgewickelt werden kann. Um zu verhindern, daß das Staub-Luft-Gemisch, das im Bereich zwischen den Trichtern 16 und dem Faltenbalg 22 vorhanden ist, in den Kopfkasten 18 eindringen kann, wird jeder Seilzug durch eine Stopfbuchse 34 hindurch in den Kopfkasten 18 geführt.

An der Außenseite der Trichter 16 ist an gegenüberliegenden Seiten derselben jeweils eine Öse 36 vorhanden, durch die der Seilzug 30 bzw. 32 hindurchgeführt ist.

Das untere Ende des Seilzugs 30, 32 endet in einem Anschlag 38, der mit einem geraden Rohr 40 biegesteif verbunden ist. Dieses Rohr 40 ragt in dem Zwischenraum zwischen dem Trichter 16.5 und dem Ausetzkonus 24 nach unten aus dem Belader 10 heraus. An seinem unteren Ende ist das Rohr 40 in dem - in der Zeichnung linken bzw. rechten - Außenbereich eines Verschlußteils 42 biegesteif angeschlossen. Im Bereich des Verschlußteils 42 setzt sich der innere hohle Bereich des Rohres 40 in einer Durchbohrung 44 fort.

Durch das Rohr 40 und die Durchbohrung 44 verläuft ein Kabel 46, an dessen unterem Ende eine Füllstandsfühler 48 befestigt ist. Das obere Ende dieses Kabels 46 durchstößt den Aufsetzkonus 24 in seinem oberen Bereich und endet in nicht näher dargestellter Weise in dem Kopfkasten 18, wo sich die Steuerorgane befinden, die die von dem Fühler 48 empfangenen Signale entsprechend verarbeiten.

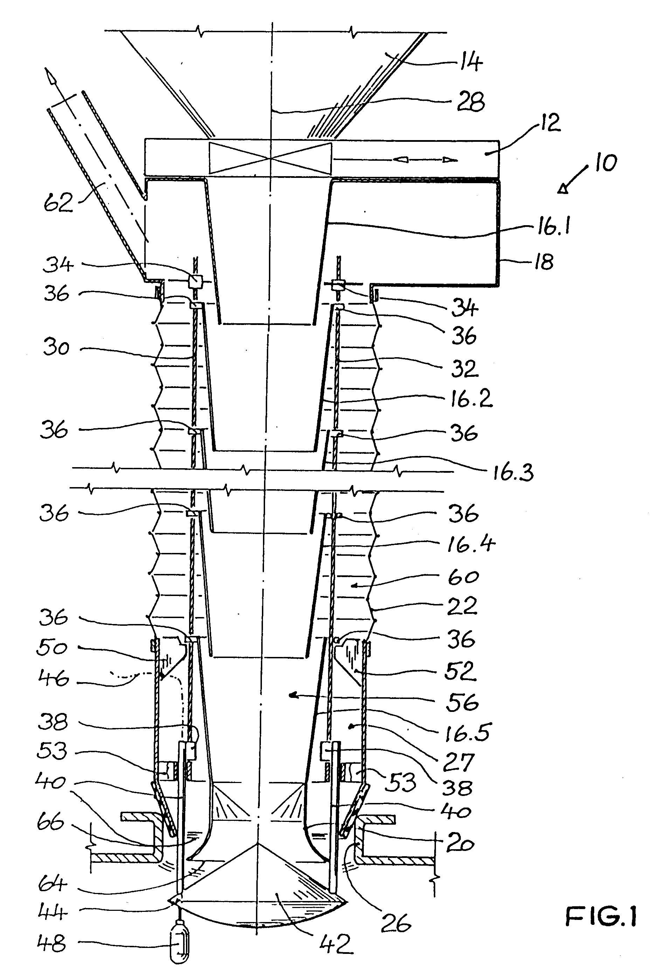

Auf der Innenseite des Aufsetzkonus 24 ist in dessen oberem Bereich eine Anschlagplatte 50, 52 vorhanden, die in den Innenraum hineinkragt und als unterer Anschlag für die Öse 36 des Trichters 16.5 dient. Bei der Darstellung gemäß Fig. 1 sitzt der unterste Trichter 16.5 mittels seiner Ösen 36 auf den Anschlagplatten 50 bzw. 52 auf, so daß er relativ zum Aufsetzkonus 24 nicht weiter abgesenkt werden kann. Der Aufsetzkonus 24 sitzt einerseits auf dem Dom 26 auf, so daß die Seilzüge 30, 32 nur noch durch das Gewicht des Verschlußteils 42 belastet werden können.

Bei der Darstellung gemäß Fig. 1 läßt sich das Verschlußteil 42 nicht weiter nach unten bewegen, da das Rohr 40 mit dem an ihm befestigten Anschlag 38 auf einer das Rohr 40 konzentrisch umgebenden Halterung 53, die ebenfalls kragartig von der Innenseite des Aufsetzkonus 24 wegsteht, aufsitzt. In diesem Zustand ist der Seilzug 30, 32 auch durch das Verschlußteil 42 nicht mehr belastet. Die nicht mehr vorhandene Zugbeanspruchung innerhalb des Seilzuges 30, 32 kann somit zur Steuerung des Schiebers dahingehend benutzt werden, daß der Schieber 12 nunmehr maximal geöffnet werden kann; der Belader 10 befindet sich nämlich in einem Zustand, in dem durch ihn das gewünschte Schüttgut hindurchströmen kann. Beim Ausströmen des Schüttgutes durch den von den Trichtern gebildeten Fallschacht 56 wird das dabei in dem Silofahrzeug verdrängte Staub-Luft-Gemisch durch den im Zwischenraum 27 zwischen den Trichtern und dem Faltenbalg 22 vorhandenen Abzugskanal 60 nach oben durch den Belader 10 hindurch abgeführt und weiter durch ein Abzugsrohr 62 wieder in den Silobehälter hineingeführt.

Bei der Darstellung gemäß Fig. 2 sind die Seilzüge 30, 32 so weit angezogen, daß das Verschlußteil 42 von unten an dem unteren freien Rand 64 des Kragens 20 mehr oder weniger dicht anliegt. Der Trichter 16.5 und auch die anderen Trichter sowie der Aufsetzkonus 24 befinden sich noch in ihrer in Fig. 1 dargestellten Lage; lediglich die Rohre 40 sind entsprechend der Zugbewegung an den Seilzügen 30, 32 nach oben versetzt vorhanden, so daß ihre Anschläge 38 nicht mehr auf den Halterungen 50, 52 von oben anliegen.

Bei der Darstellung gemäß Fig. 3 liegt das Verschlußteil 42 von unten an dem unteren freien Rand 66 des Aufsetzkonus 24 staubdicht an. Diese Lage hat das Verschlußteils 42 dadurch eingenommen, daß die Seilzüge 30, 32 und damit auch die Rohre 40 entsprechend weit nach oben angehoben worden sind. Bei der, gegenüber Fig. 2, höheren Positionierung des Verschlußteils 42 ist mit letzterem auch der untere Trichter 16.5 entsprechend weit nach oben mit angehoben worden. Der darüber befindliche Trichter 16.4 hat seine Lage weder bei der Darstellung gemäß Fig. 2 noch bei der Darstellung gemäß Fig. 3 höhenmäßig verändert.

In Fig. 4 ist der Belader 10 in einer Lage dargestellt, in dem er nicht mehr auf dem Dom 26 des Silofahrzeugs aufsitzt. Diese Lage hat der Belader dadurch eingenommen, daß das Verschlußteil 42 gegenüber seiner Lage in Fig. 3 weiter nach oben mittels der Seilzüge 30, 32 und damit auch der Rohre 40 angehoben worden ist. Bei dieser weiteren Hubbewegung ist auch der untere Trichter 16.5 entsprechend weit nach oben mit angehoben worden. Der darüber befindliche Trichter 16.4 hat seine höhenmäßige Lage (noch) nicht verändert. Dadurch hat sich der untere Trichter 16.5 entsprechend weit von unten über den oberen Trichter 16.4 übergestülpt.

Durch weiteres nach oben Ziehen der Seilzüge 30, 32 und damit auch des Verschlußteils 42 stülpen sich von unten her auch die übrigen Trichter ineinander, so daß der Aufsetzkonus 24 des Beladers 10 entsprechend weit nach oben angehoben werden kann.

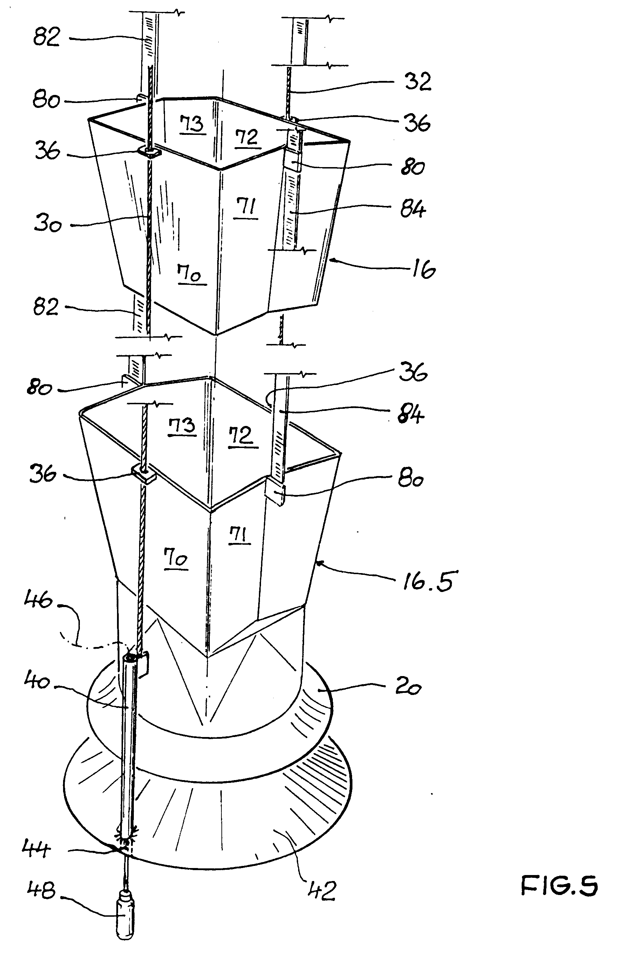

Bei der Darstellung gemäß Fig. 5 ist das Verschlußteil 42 zu erkennen, an dem eines der Rohre 40 biegesteif befestigt ist. Das Kabel 26 führt von oben durch das Rohr und die Durchbohrung 44 hindurch und endet in dem Fühler 48, der sich unterhalb des Verschlußteils 42 befindet. Am oberen Ende des Rohres 40 besitzt dasselbe den Anschlag 38, in dem der Seilzug 30 bzw. 32 befestigt ist. Die Seilzüge 30, 32 werden lagemäßig durch Ösen 36 in ihrer Position gehalten. die jeweils im Bereich eines jeden Trichters 16 vorhanden sind. Diese Ösen 36 sind an zwei gegenüberliegenden Seiten 70, 72 eines jeden Trichters vorhanden. An den beiden anderen Seiten 71, 73 eines jeden Trichters sind Halterungen 80 angebracht. Diese Halterungen dienen jeweils zur Befestigung eines Gurtbandes 82, 84. Damit befinden sich auf zwei gegenüberliegenden Seiten eines jeden Trichters die beiden Seilzüge 30, 32 und auf den beiden anderen gegenüberliegenden Seiten eines jeden Trichters die Gurtbänder 82, 84.

Jeder Trichter 16 - auch der unterste Trichter 16.5 ohne den an ihm vorhandenen Kragen 20 - besteht aus zwei jeweils trapezförmigen Zuschnitten, die entsprechend abgebogen und - beispielsweise mittels Schweißnähte - miteinander verbunden sind. Die Trapezform der beiden Zuschnitte eines jeden Trichters bedingt, daß die oberen und unteren Ränder von zwei gegenüberliegenden Seiten, in Fig. 5 der Seiten 71, 73, satteldachmäßig ausgebildet sind. Da alle entsprechenden oberen und unteren Ränder der Trichter diese Form haben, wirkt diese Satteldachausbildung nicht störend. Damit ist eine verschnittfreie Möglichkeit zum Herstellen im Querschnitt quadratischer, sich nach oben verjüngender Trichter vorhanden.

## Patentansprüche

1.  Vorrichtung zum Beladen eines Silofahrzeuges oder dergleichen mit rieselfähigem Schüttgut mit

    - einem Fallschacht (56) für das Schüttgut, der mehrere, über die Fallhöhe verteilt angeordnete, sich jeweils in Längsrichtung (28) des Fallschachtes nach unten verjüngende Trichter (16) besitzt,
    - einem außerhalb des Fallschachtes vorhandenen Abzugskanal (60) zum Abführen des beim Befüllen entweichenden SchüttgutLuft-Gemisches,
    - einem Aufsetzkonus (24) zum staubdichten Aufsetzen der Vorrichtung auf der kreisförmigen Einfüllöffnung (26) des Silofahrzeuges, der die äußere untere Umhüllung des Abzugskanals bildet,
    - einem Verschlußteil (42) am unteren Ende des Aufsetzkonus zum Verschließen des unteren Ende des Fallschachtes,
    - einer Einrichtung zum Halten des Verschlußteils in unterschiedlich großem Abstand zum unteren Rand des Fallschachtes, die zumindest ein erstes Zugglied (30, 32) enthält,
    **dadurch gekennzeichnet, daß**
    - zumindest der unterste Trichter (16.5) in seinen zur Längsrichtung (28) des Fallschachtes (56) normalen Querschnittsebenen in etwa rechteckförmig ist,

- zumindest eine Trichterseite im Grundriß sehnenartig den die Öffnung der Beladevorrichtung begrenzenden Kreisbogen des Aufsetzkonus (24) schneidet und

- das erste Zugglied (30, 32, 40) längs einer Geraden in dem Abzugskanal (60) vorhanden ist, wobei es so an dem Verschlußteil (42) befestigt ist, daß es in dem zwischen dieser Sehne und dem Kreisbogen als Aufsetzkonus (24) grundrißmäßig vorhandenen Freiraum führbar ist.

2. Vorrichtung nach Anspruch 1,
   **dadurch gekennzeichnet,** daß
   das erste Zugglied (30, 32) parallel zur Längsrichtung (28) des Fallschachtes (56) vorhanden ist.

3. Vorrichtung nach Anspruch 1,
   **dadurch gekennzeichnet,** daß
   an der Außenseite des untersten Trichters (16.5) eine Führung (53) vorhanden ist, in der das erste Zugglied (30, 32) so höhenmäßig verstellbar ist, daß das Verschlußteil (42) kipp- und verdrehsicher in unterschiedlich großem Abstand vom unteren Rand des Aufsetzkonus (24) entfernt positionierbar ist.

4. Vorrichtung nach Anspruch 1,
   **dadurch gekennzeichnet,** daß
   das erste Zugglied (30, 32) im Bereich des zumindest untersten Trichters (16.5) in sich biegesteif ausgebildet ist.

5. Vorrichtung nach Anspruch 4,
   **dadurch gekennzeichnet,** daß
   das erste Zugglied (30, 32) in seinem unteren Bereich zwei biegesteife stabförmige Glieder (40) und in seinem daran anschließenden oberen Bereich zwei Zugseile (30, 32) besitzt, wobei jeweils ein Zugseil an einem stabförmigen Glied und jedes der stabförmigen Glieder an dem Verschlußteil (42) befestigt ist und wobei jedes Zugseil mit seinem oberen Ende in dem oberen Bereich der Vorrichtung auf- und abwickelbar gehalten ist.

6. Vorrichtung nach Anspruch 1,
   **dadurch gekennzeichnet,** daß
   - die Trichter (16) untereinander durch zumindest zwei zweite Zugglieder (82, 84) aneinanderhängend gehalten sind,
   - jeweils ein zweites Zugglied auf zwei gegenüberliegenden Seitenwänden (71, 73) eines jeden Trichters (16) befestigt ist,
   - jeweils eine Führung (36) an den zwei übrigen Seitenwänden (70, 72) eines jeden Trichters vorhanden ist, in der jeweils ein erstes Zugglied (30, 32) in der Höhe verstellbar gehalten ist.

7. Vorrichtung nach Anspruch 1,
   **dadurch gekennzeichnet,** daß
   der Fallschacht (56) insgesamt, auch im Bereich des Kopfkastens (18), aus im Querschnitt rechteckigen Trichtern (16) zusammengesetzt ist, wobei der obere Rand der Einfüllöffnung der Beladevorrichtung von dem oberen freien Rand des obersten Trichters (16.1) gebildet wird.

8. Vorrichtung nach Anspruch 7,
   **dadurch gekennzeichnet,** daß
   im Bereich außerhalb des obersten Trichters (16.1) ein die gesamte Mechanik der Beladevorrichtung aufnehmender Kopfkasten (18) vorhanden ist.

9. Vorrichtung nach Anspruch 1,
   **dadurch gekennzeichnet,** daß
   der zumindest unterste Trichter (16.5) in seinen zur Längsrichtung (28) des Fallschachtes normalen Querschnittsebenen in etwa quadratisch ausgebildet ist.

10. Vorrichtung nach Anspruch 1,
    **dadurch gekennzeichnet,** daß
    am unteren Öffnungsrand des untersten Trichters (16.5) ein sich nach unten trompetenartig erweiterndes Kragenteil (20) angebracht ist, wobei der größte Querschnittsdurchmesser dieses Kragenteils mindestens um so viel kleiner als der lichte Durchmesser der unteren Öffnung des Verschlußkonus (24) ist, daß grundrißmäßig nach wie vor ein Zwischenraum zwischen unterstem Trichter und Verschlußkonus vorhanden ist, durch den das erste Zugglied (30, 32, 40) hindurchführbar ist.

11. Vorrichtung nach Anspruch 5,
    **dadurch gekennzeichnet,** daß
    das biegesteife stabförmige Glied ein Rohr (40) ist, durch dessen Inneres die Versorgungsleitung (46) für einen am Verschlußteil (42) vorhandenen Füllstandsfühler (48) führbar ist.

**Claims**

1. Device for loading a silo vehicle or similar with pourable bulk material, with
   - a chute (56) for the bulk material, which chute has several funnels (16) which are distributed over the height of fall and in each case taper downwards in the longitudinal direction (28) of the chute,

- an offtake channel (60) provided outside the chute for the offtake of the bulk material/air mixture which escapes upon filling,
- a set-down cone (24) for the dustproof setting down of the device on the circular filling opening (26) of the silo vehicle, which forms the exterior lower casing of the offtake channel,
- a closing part (42) at the lower end of the set-down cone for closing the lower end of the chute,
- a device which comprises at least one first pull member (30, 32) for holding the closing part at varying distances from the lower edge of the chute, characterised in that
- at least the lowest funnel (16.5) is approximately rectangular in its cross-sectional planes which are normal to the longitudinal direction (28) of the chute (56),
- at least one side of the funnel intersects in the manner of a chord in plan view the circular arc of the set-down cone (24) delimiting the opening of the loading device and
- the first pull member (30, 32, 40) is provided along a straight line in the offtake channel (60) and is fastened to the closing part (42) in such a manner that it can be guided in the free space existing in plan view between this chord and the circular arc as set-down cone (24).

2. Device according to Claim 1, characterised in that the first pull member (30, 32) is provided parallel to the longitudinal direction (28) of the chute (56).

3. Device according to Claim 1, characterised in that a guide (53) is provided on the outside of the lowest funnel (16.5), in which guide the first pull member (30, 32) is height-adjustable in such a manner that the closing part (42) can be positioned in a tip-resistant and twist-resistant manner at varying distances from the lower edge of the set-down cone (24).

4. Device according to Claim 1, characterised in that the first pull member (30, 32) is itself formed rigidly in the area of at least the lowest funnel (16.5).

5. Device according to Claim 4, characterised in that the first pull member (30, 32) has in its lower area two rigid rod-shaped members (40) and in its adjacent upper area two pull ropes (30, 32), one pull rope in each case being fastened to one rod-shaped member and each of the rod-shaped members being fastened to the closing part (42), and each pull rope being at the same time held with its upper end in the upper area of the device in such a manner that it can be wound up or unwound.

6. Device according to Claim 1, characterised in that
- the funnels (16) are held one below another and suspended one from another by at least two second pull members (82, 84),
- in each case a second pull member is fastened to two opposite lateral walls (71, 73) of each funnel (16);
- in each case on the two remaining lateral walls (70, 72) of each funnel a guide (36) is provided, in which in each case a first pull member (30, 32) is height-adjustably held.

7. Device according to Claim 1, characterised in that the chute (56), also in the area of the top casing (18), is entirely formed from funnels (16) which have a rectangular cross-section, the upper edge of the filling opening of the loading device being formed by the upper free edge of the uppermost funnel (16.1).

8. Device according to Claim 7, characterised in that a top casing (18), which accommodates the entire mechanics of the loading device, is provided in the area outside the uppermost funnel (16.1).

9. Device according to Claim 1, characterised in that at least the lowest funnel (16.5) is formed approximately square in its cross-sectional planes which are normal to the longitudinal direction (28) of the chute.

10. Device according to Claim 1, characterised in that on the lower opening edge of the lowest funnel (16.5) a collar part (20) which widens downwards in the manner of a trumpet is arranged, the greatest cross-sectional diameter of this collar part being smaller than the internal diameter of the lower opening of the closing cone (24) at least by so much that there exists in plan view as before a free space between lowest funnel and closing cone, through which the first pull member (30, 32) can be guided.

11. Device according to Claim 5, characterised in that the rigid rod-shaped member is a tube (40), through the inside of which the power supply wire (46) for a level indicator (48), which is provided on the closing part (42), can be conducted.

## Revendications

1. Dispositif de chargement d'un véhicule citerne ou similaire avec une marchandise en vrac capable d'écoulement; avec
   - un puits de chute (56) de la marchandise en vrac, qui possède plusieurs entonnoirs (16) disposés régulièrement suivant la hauteur de chute et se rétrécissant chacun vers le bas dans la direction longitudinale (28) du puits de chute,
   - une cheminée d'extraction (60) disposée a l'extérieur du puits de chute, pour extraire le mélange d'air et de marchandise en vrac s'échappant en cours de remplissage,
   - un cône de pose (24) pour la pose étanche á la poussiére du dispositif sur l'ouverture de remplissage (26) de forme circulaire du véhicule citerne, et qui forme l'enveloppe inférieure extérieure de la cheminée d'extraction,
   - une pièce de fermeture (42) á l'extrémité inférieure du cône de pose, pour fermer l'extrémité inférieure du puits de chute,
   - un dispositif de maintien de la pièce de fermeture á différentes distances du bord inférieur du puits de chute, et qui comprend au moins un premier membre de traction (30, 32), caractérisé en ce que
   - au moins l'entonnoir inférieur (16.5) est dans le plan de sa coupe transversale perpendiculaire á la direction longitudinale (28) du puits de chute (56) de forme rectangulaire,
   - au moins un côté de l'entonnoir découpe suivant une corde dans le plan horizontal l'arc de cercle du cône de pose (24) limitant l'ouverture du dispositif de chargement, et
   - le premier membre de traction (30, 32, 40) est situé le lonf d'une droite dans la cheminée d'extraction (60), et est fixé á la pièce de fermeture (42) de telle manière qu'il peut être guidé dans l'espace libre horizontal situé entre cette corde et l'arc de cercle et servant de cône de pose.

2. Dispositif selon la revendication 1, **caracterisé en ce que** le premier membre de traction (30 32) est situe parallélement á la direction longitudinale (28) du puits de chute (56).

3. Dispositif selon la revendication 1, **caractérisé en ce que** sur le côté extérieur de l'etonnoir inférieur (16.5) se trouve un guidage (53) dans lequel le premier membre de traction (30, 32) peut être déplacé en hauteur de telle sorte que la pièce de fermeture (42) peut être positionnée sans basculement ni rotation, et séparée d'une distance plus ou moins grande du bord inférieur du cône de pose (24)

4. Dispositif selon la revendication 1, **caractérisé en ce que** le premier membre de traction (30, 32) est réalisé sous une forme en soi non pliable au moins au voisinage de l'entonnoir inférieur (16.5).

5. Dispositif selon la revendication 4, **caractérisé en ce que** le premier membre de traction (30, 32) possède dans sa partie inférieure deux membres (40) en forme de barreau et résistant au pliage et dans sa partie supérieure qui s'y raccorde deux câbles de traction (30, 32), chaque câble de traction étant fixé á un membre en forme de barreau et chacun des membres en forme de barreau étant fixé á la pièce de fermeture (42), et l'extrémité supérieure de chaque câble de traction étant maintenue á enroulement et á déroulement dans la partie supérieure du dispositif.

6. Dispostif selon la revendication 1, **caractérisé en ce que**
   - les entonnoirs (16) sont maintenus les uns en-dessous des autres et en suspension l'un á l'autre par au moins deux seconds membres de traction (82, 84),
   - un des seconds membres de traction est fixé sur chaque paroi latérale opposée (71, 73) de chaque entonnoir (16).
   - sur les deux autres parois latérales (70, 72) de chaque entonnoir se trouve un guide (36) dans lequel un premier membre de traction (30, 32) est chaque fois maintenu reglable en hauteur.

7. Dispositif selon la revendication 1, **caractérisé en ce que** le puits de chute est entiérement formé par l'assemblage d'entonnoirs de section transversale rectangulaire, même au voisinage du caisson de tête (18), le bord supérieur de l'ouverture de remplissage du dispositif de chargement étant formé par le bord supérieur libre de l'entonnoir supérieur (16.1).

8. Dispositif selon la revendication 7, **caractérisé en ce que** dans la partie extérieure a l'entonnoir supérieur (16.1) est situé un caisson reprenant l'ensemble de la mécanique du dispositif de chargement.

9. Dispositif selon la revendication 1, **caractérisé en ce qu'**au moins l'entonnoir inférieur (16.5) est réalisé de forme á peu prés carrée dans le plan de sa section transversale perpendiculaire á la direction longitudinale (28) du puits de chute.

10. Dispositif selon la revendication 1, **caractérisé en ce qu'**une pièce de collet (20) s'élargissant vers le bas en forme de trompette est placée sur le bord inférieur de l'ouverture de l'entonnoir inférieur (16.5), le plus grand diamétre de la section transversale de cette pièce de collet étant plus petit que le petit diamétre de l'ouverture inférieure du cône de pose (24) dans une mesure telle que comme précédemment il existe dans le plan horizontal, entre le cône de pose et l'entonnoir inférieur un espace intermédiaire á travers lequel le premier membre de traction (30, 32, 40) peut être guidé.

11. Dispositif selon la revendication 5, **caractérisé en ce que** le membre résistant au pliage et en forme de barreau est un tube (40) a l'intérieur duqyel on peut guider le conducteur d'alimentation (46) d'une sonde de détection de remplissage (48) se trouvant sur la pièce de fermeture (42).

FIG.1

FIG.2            FIG.3            FIG.4

EP 0 304 020 B1

FIG.5